# EUROPÄISCHE PATENTANMELDUNG

(11) **EP 3 763 792 A1**
(43) Veröffentlichungstag der Anmeldung: **13.01.2021**
(21) Anmeldenummer: 19185845.5
(22) Anmeldetag: 11.07.2019
(51) Int. Cl.: C09D 175/04, C08G 18/20, C08G 18/16, C08G 18/02, C08G 18/28, C08G 18/24, C08G 18/32, C08G 18/79

(54) **VERFAHREN ZUR HERSTELLUNG VON ISOCYANURATEN AUS URETDIONEN**

(71) Anmelder: Covestro Deutschland AG, 51373 Leverkusen (DE)
(72) Erfinder: Laas, Hans-Josef, 51519 Odenthal (DE); Stempfle, Florian, 50825 Köln (DE); Laemmerhold, Kai, 52078 Aachen (DE); Beuck, Saskia, 51375 Leverkusen (DE); Pires, Raul, 50670 Köln (DE); Gürtler, Christoph, 50735 Köln (DE); Yuva, Nusret, 51399 Burscheid (DE); Born, Ralph-Georg, 42855 Remscheid (DE); Thiel, Daniel, 51375 Leverkusen (DE); Bayram, Tuba Fatma, 52072 Aachen (DE); Guduguntla, Sureshbabu, 2300 Turnhout (BE); Leitner, Walter, 52074 Aachen (DE)
(74) Vertreter: Levpat

(57) **Zusammenfassung**

Die Erfindung betrifft ein Verfahren zur Herstellung Isocyanuratgruppen enthaltender Verbindungen, umfassend Umsetzung von A) mindestens einer im Wesentlichen isocyanatgruppenfreien Komponente, die mindestens eine Uretdiongruppe aufweist, in Gegenwart B) mindestens eines Katalysators, enthaltend ein Strukturelement der allgemeinen Formeln (I) und/oder (II) 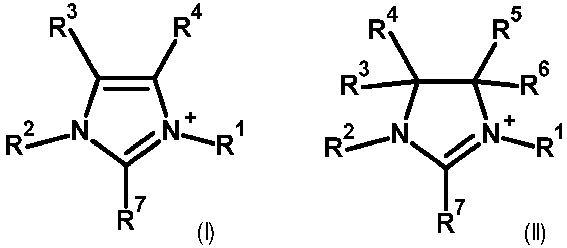 in welchen R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei R³, R⁴, R⁵ und R⁶ unabhängig voneinander auch für Wasserstoff stehen können, und R⁷ für Wasserstoff oder ein Carboxylat-Anion (COO⁻) steht.

## Beschreibung

Die vorliegende Erfindung betrifft ein Verfahren zur Herstellung Isocyanuratgruppen enthaltender Verbindungen, solche Verbindungen enthaltende Zusammensetzungen und die Verwendung dieser Zusammensetzungen zur Herstellung von Polyurethan-Kunststoffen oder Beschichtungsmittel. Außerdem betrifft die Erfindung Beschichtungsmittel, enthaltend die Zusammensetzungen und mit dem Beschichtungsmittel beschichtete Substrate. Auch betrifft die Erfindung Formkörper aus dem Polyurethan-Kunststoff.

Isocyanuratstrukturen nehmen unter den möglichen Reaktionsprodukten der Isocyanatgruppe eine besondere Stellung ein. Sie weisen gegenüber anderen Isocyanatfolgeprodukten, wie z. B. Biuret- Uretdion-, Urethan- oder Allophanatstrukturen, deutlich höhere Beständigkeiten, beispielsweise gegen Hydrolyse und Temperatur auf. Die Herstellung von Isocyanuraten erfolgt in der Regel durch katalytische Trimerisierung von Isocyanaten. In der Vergangenheit wurden eine Vielzahl von Verfahren entwickelt, die sich insbesondere bezüglich der verwendeten Trimerisierungskatalysatoren unterscheiden.

Bekannte Trimerisierungskatalysatoren sind beispielsweise tertiäre Amine oder Phosphine, tertiäre Hydroxyalkylamine (GB 2 221 465), Gemische tertiärer bicyclischer Amine mit einfachen niedermolekularen aliphatischen Alkoholen (GB 2 222 161), Organometallverbindungen (DE-A 3 240 613), Alkali- und Erdalkali-Salze von Carbonsäuren (DE-A 3 219 608, EP-A 0 100 129), Alkaliphenolate (GB-PS 1 391 066, GB-PS 1 386 399), Alkali- und Erdalkalioxide, -hydroxide, -carbonate, -alkoholate und - phenolate (GB 809 809), mit Kronenethern oder Polyetheralkoholen komplexierte basische Alkalimetallverbindungen (EP-A 0 056 158, EP-A 0 056 159), Pyrrolidinon-Kaliumsalz (EP-A 0 033 581), quaternäre Ammoniumhydroxyde (DE-A 1 667 309, EP-A 0 013 880, EP-A 0 047 452), quaternäre Hydroxyalkylammoniumhydroxide (EP-A 37 65, EP-A 10 589), Trialkylhydroxylalkylammoniumcarboxylate (DE-A 2631733, EP-A 0 671 426, EP-A 1 599 526, US 4,789,705), quartäre Benzylammoniumcarboxylate (EP-A 1 229 016), tetrasubstituierte Ammonium-α-hydroxycarboxylate (WO 2005/087828), quartäre Ammonium- oder Phosphoniumfluoride (EP-A 0 339 396, EP-A 0 379 914, EP-A 0 443 167), quaternäre Ammonium- und Phosphoniumpolyfluoride (EP-A 0 798 299, EP-A 0 896 009, EP-A 0 962 455), Tetraalkylammoniumalkylcarbonate (EP-A 0 668 271), quaternäre Ammoniumhydrogencarbonate (WO 1999/023128) aus tertiären Aminen und alkylierend wirkenden Estern von Säuren des Phosphors erhältlichen quartären Ammoniumsalze (EP 0 102 482) oder tetrasubstituierte Ammoniumsalze von Lactamen (WO 2013/167404). Verbindungen mit Imidazoliumsalz-Struktur wurden ebenfalls bereits als Katalysatoren zur Trimerisierung von Isocyanatgruppen eingesetzt. Beispielsweise lassen sich unter Verwendung von Katalysatoren, die Imidazolium- oder Imidazoliniumkationen enthalten, vorzugsweise aromatische monomere Diisocyanate aber auch oligomere Polyisocyanate, wie Dimere oder Prepolymere, zu Polyisocyanurat- bzw. Polyisocyanurat/Polyurethanen trimerisieren (WO 2010/054317, WO 2014/160616, WO 2015/006391).

Imidazolium- oder Imidazoliniumsalze katalysieren darüberhinaus auch die Reaktion von aromatischen Epoxiden mit aromatischen Isocyanaten zu Oxazolidinon- und Isocyanuratgruppen enthaltenden Kunststoffen (WO 2016/102359).

Nach der Lehre der WO 2005/113626 stellen N-heterocyclische Carbene (NHC), wie z. b. solche mit Imidazolium- oder Imidazoliniumstruktur, ausgezeichnete Katalysatoren zur Herstellung von Uretdion- und/oder Isocyanuratpolyisocyanaten aus beliebigen monomeren Mono-, Di- und Triisocyanaten dar. Dabei können sowohl die freien N-heterocyclischen Carbene als auch deren Addukte an Kohlenstoffdioxid, sogenannten Imidazolium- oder Imidazoliniumcarboxylate, zum Einsatz gelangen. Das Verfahren liefert in Abhängigkeit von der Art des eingesetzten Isocyanats und des eingesetzten Katalysators bereits bei niedrigen Temperaturen Uretdione oder Isocyanurate, die häufig auch als Gemisch anfallen.

In Eur. J. Inorg. Chem. 2009, 1970-1976 werden Addukte N-heterocyclischer Carbene mit Imidazolium- oder Imidazoliniumstruktur an Kohlenstoffdioxid, Magnesium, Aluminium und Zink als Katalysatoren für die Synthese von Polyurethanen und auch zur Trimerisierung von Isocyanatgruppen beschrieben.

Bei allen bekannten Verfahren des Standes der Technik zur Herstellung von Isocyanuraten kommen als Ausgangsverbindungen immer solche mit freien Isocyanatgruppen, insbesondere monomere Diisocyanate, zum Einsatz. Isocyanatfunktionelle Verbindungen sind in der Regel aber als gesundheitsschädliche, sensibilisierende oder sogar giftige Arbeitsstoffe eingestuft, die zum Teil auch einen hohen Dampfdruck aufweisen. Die Verarbeitung von Verbindungen mit freien Isocyanatgruppen, insbesondere monomerer Diisocyanate, erfordert daher aus Gründen der Arbeitshygiene einen großen sicherheitstechnischen Aufwand.

Wie jetzt überraschend gefunden wurde, lassen sich Uretdiongruppen, die in Verbindungen vorliegen, die frei von Isocyanatgruppen sind, in Gegenwart von Katalysatoren mit Imidazolium- oder Dihydroimidazolium-Kation direkt zu Isocyanuratstrukturen umsetzen, ohne dass dabei intermediär freie Isocyanatgruppen auftreten.

Diese direkte Reaktion von Uretdion- zu Isocyanuratstrukturen war bisher nicht bekannt. Sie eröffnet erstmals die Möglichkeit über Isocyanuratgruppen vernetzte Polyurethane ausgehend von im Wesentlichen isocyanatgruppenfreien, physiologisch unbedenklichen Polyuretdionsystemen zu synthetisieren.

Gegenstand der vorliegenden Erfindung ist ein Verfahren zur Herstellung Isocyanuratgruppen enthaltender Verbindungen, umfassend Umsetzung von
A) mindestens einer im Wesentlichen isocyanatgruppenfreien Komponente, die mindestens eine Uretdiongruppe aufweist, in Gegenwart
B) mindestens eines Katalysators, enthaltend ein Strukturelement der allgemeinen Formeln (I) und/oder (II) 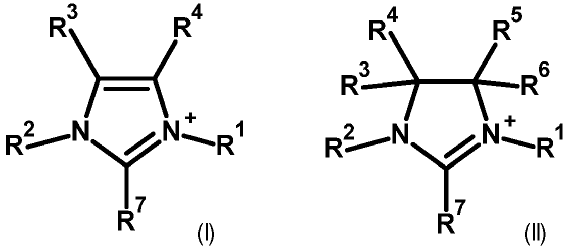 in welchen
   R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
   R³, R⁴, R⁵ und R⁶ unabhängig voneinander auch für Wasserstoff stehen können,und
   R⁷ für Wasserstoff oder ein Carboxylat-Anion (COO⁻) steht.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Bei der Uretdiongruppe aufweisenden Komponente A) handelt es sich um beliebige, Uretdiongruppen enthaltende Verbindungen, die im Wesentlichen frei von Isocyanatgruppen sind, wie sie nach an sich bekannten Methoden erhältlich sind. In einer ersten bevorzugten Ausführungsform handelt es sich bei der Komponente A) um durch Oligomerisierung monomerer Isocyanate und/oder durch Umsetzung isocyanatfunktioneller Uretdiongruppen enthaltender Verbindungen mit Alkoholen und/oder Aminen erhältliche Polyadditionsverbindungen.

Ausgangsverbindungen zur Herstellung der Uretdiongruppen aufweisenden Komponente A) sind beliebige, auf verschiedene Weise, beispielsweise durch Phosgenierung in der Flüssig- oder Gasphase oder auf phosgenfreien Weg, wie z. B. durch thermische Urethanspaltung, zugängliche Mono-, Di- und Triisocyanate mit aliphatisch, cycloaliphatisch, araliphatisch und/oder aromatisch gebundenen Isocyanatgruppen.

Bevorzugte Monoisocyanate sind solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat.

Bevorzugte Diisocyanate sind solche des Molekulargewichtsbereichs 140 bis 400, wie z.B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)isocyanato-methylcyclohexan, Bis-(isocyanatomethyl)-norbornan (NBDI), 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat oder 2,4-Diisocyanato-1-[(5-isocyanato-2-methylphenyl)methyl]benzol.

Weitere ebenfalls geeignete Diisocyanate finden sich darüber hinaus beispielsweise in Justus Liebigs Annalen der Chemie Band 562 (1949) S. 75 - 136.

Als besonders geeignetes Triisocyanat sei beispielhaft 4-Isocyanatomethyl-1,8-octandiisocyanat (Triisocyanatononan; TIN) genannt.

Als Ausgangsverbindungen zur Herstellung der Uretdiongruppen aufweisenden Komponente A) können auch Mischungen aus mindestens zwei solcher Mono-, Di- und/oder Triisocyanate zum Einsatz kommen.

Bevorzugt kommen als Ausgangsverbindungen zur Herstellung der Uretdiongruppen aufweisenden Komponente A) monomere Diisocyanate zum Einsatz.

Besonders bevorzugt ist die Verwendung von PDI, HDI, IPDI, NBDI, XDI und/oder H₁₂-MDI, ganz besonders bevorzugt ist die Verwendung von PDI und/oder HDI. Somit handelt es sich in einer weiteren bevorzugten Ausführungsform bei der Komponente A) um Uretdiongruppen enthaltende Verbindungen auf Basis von PDI, HDI, IPDI, NBDI, XDI und/oder H₁₂-MDI.

Die Herstellung der Uretdiongruppen aufweisenden Komponente A) bzw. der Ausgangsverbindungen zu ihrer Herstelllung kann nach unterschiedlichen Methoden erfolgen, denen im allgemeinen die üblichen literaturbekannten Verfahren zur Oligomerisierung einfacher Diisocyanaten zugrunde liegen, wie sie beispielsweise in J. Prakt. Chem. 336 (1994) 185 - 200, der DE-A 16 70 666, DE-A 19 54 093, DE-A 24 14 413, DE-A 24 52 532, DE-A 26 41 380, DE-A 37 00 209, DE-A 39 00 053, DE-A 39 28 503, EP-A 336 205, EP-A 339 396 und EP-A 798 299 beschrieben sind.

Die Uretdiongruppen aufweisenden Komponenten A) können bei ausschließlicher Verwendung oder anteiliger Mitverwendung von Monoisocyanaten unmittelbar im Anschluß an die Oligomerisierungsreaktion in isocyanatgruppenfreier Form vorliegen. Vorzugsweise kommen bei der Oligomerisierungsreaktion jedoch zumindest zusätzlich Di- und/oder Triisocyanate in solchen Mengen zum Einsatz, dass zunächst isocyanatfunktionelle Uretdiongruppen enthaltende Verbindungen erhalten werden, die eine mittlere NCO-Funktionalität von mindestens 1,6, vorzugsweise von 1,8 bis 3,5, besonders bevorzugt von 1,9 bis 3,2, ganz besonders bevorzugt von 2,0 bis 2,7 aufweisen.

Bei mittleren NCO-Funktionalitäten von > 2,0 liegen in diesen isocyanatfunktionellen Uretdiongruppen enthaltenden Verbindungen neben linearen difunktionellen Uretdionstrukturen noch weitere, mindestens trifunktionelle Polyisocyanatmoleküle vor. Bei diesen höherfunktionellen Bestandteilen der Uretdiongruppen enthaltenden Verbindungen handelt es sich insbesondere um die bekannten Folgeprodukte von Diisocyanaten mit Isocyanurat-, Allophanat-, Biuret-, Urethan- und/oder Iminooxadiazindionstruktur.

Die durch Oligomerisierung erhaltenen Uretdiongruppen enthaltenden Verbindungen werden im allgemeinen unmittelbar im Anschluß an ihre oben beschriebene Herstellung aus einfachen monomeren Mono-, Di- und/oder Triisocyanaten nach bekannten Methoden, beispielsweise durch Dünnschichtdestillation oder Extraktion, vom nicht umgesetzten Monomerüberschuß befreit. Sie weisen daher in einer bevorzugten Ausführungsform Restgehalte an monomeren Diisocyanaten von weniger als 5 Gew.-%, vorzugsweise weniger als 2 Gew.-%, besonders bevorzugt weniger als 1 Gew.-%, auf.

Für den Fall, dass im Anschluß an die Oligomerisierungsreaktion nicht bereits isocyanatgruppenfreie Uretdiongruppen aufweisenden Komponente A) sondern isocyanatfunktionelle Uretdiongruppen enthaltende Verbindungen, vorliegen, werden diese letztgenannten mit Alkoholen und/oder Aminen zu im Wesentlichen isocyanatgruppenfreien, Uretdiongruppen enthaltenden Polyadditionsverbindungen A) umgesetzt.

Geeignete Alkohole zur Herstellung der Polyadditionsverbindungen A) sind beispielsweise einfache aliphatische bzw. cycloaliphatische Monoalkohole, wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole und Hydroxymethylcyclohexan, Etheralkohole, wie 2-Methoxyethanol, 2-Ethoxyethanol, 2-Propoxyethanol, 2-Butoxyethanol, Diethylenglykolmonomethylether, Diethylenglykolmonoethylether, Diethylenglykolmonobutylether, 3-Methoxy-1-butanol und Glycerin-1,3-diethylether, Esteralkohole, wie Hydroxyethylacetat, Butylglycolat, Ethyllactat, Glycerindiacetat oder solche, wie sie sich durch Umsetzung der genannten Monoalkohole mit Lactonen erhalten lassen oder Etheralkohole, wie sie sich durch Umsetzung der genannten Monoalkohole mit Alkylenoxiden, insbesondere Ethylenoxid und/oder Propylenoxid, erhalten lassen.

Ebenfalls geeignete Alkohole zur Herstellung der im Wesentlichen isocyanatgruppenfreien, Uretdiongruppen enthaltenden Polyadditionsverbindungen A) sind beliebige mindestens difunktionellen Polyole des Molekulargewichtsbereiches 62 bis 22000, vorzugsweise solche, die eine mittlere Funktionalität von 2 bis 6 und ein zahlenmittleres Molekulargewicht von 62 bis 18000, besonders bevorzugt eine mittlere Funktionalität von 2 bis 4 und ein zahlenmittleres Molekulargewicht von 90 bis 12000, aufweisen.

Geeignete Polyole zur Herstellung der im Wesentlichen isocyanatgruppenfreien, Uretdiongruppen enthaltenden Polyadditionsverbindungen A) sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.0^{2,6}]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester.

Geeignete Polyole zur Herstellung der im Wesentlichen isocyanatgruppenfreien, Uretdiongruppen enthaltenden Polyadditionsverbindungen A) sind auch die üblichen aus der Polyurethanchemie bekannten polymeren Polyetherpolyole, Polyesterpolyole, Polycarbonatpolyole und/oder Polyacrylatpolyole, die üblicherweise ein zahlenmittleres Molekulargewicht von 200 bis 22000, vorzugsweise von 250 bis 18000, besonders bevorzugt von 250 bis 12000 aufweisen. Ein breiter Überblick über geeignete polymere Polyole zur Herstellung der Polyadditionsverbindungen A2) findet sich beispielsweise in N. Adam et al.. Polyurethanes. In: Ullmann's Encyclopedia of Industrial Chemistry, Wiley-VCH Verlag GmbH & Co. KgaA; 2005. URL: https://doi.org/10.1002/14356007.a21_665.pub2.

Geeignete Polyetherpolyole sind beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) (https://doi.org/10.1002/ange.19600722402) durch Polymerisation von Tetrahydrofuran erhältlichen Polytetramethylenetherglykole mit zahlenmittleren Molekuargewichten von 400 g/mol bis 4000 g/mol.

Geeignete Polyesterpolyole sind beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpoylole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Lactonen, wie z. B. ε-Caprolacton, und einfachen mehrwertigen Alkoholen, wie z. B. den oben beispielhaft genannten, als Startermolekülen unter Ringöffnung erhältlich sind.

Geeignete Polycarbonatpolyole sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Ebenfalls geeignete Polycarbonatpolyole sind solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können.

Geeignete Polyacrylatpolyole sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole sind Polymerisate bzw. Copolymerisate von Hydroxyalkylestern der Acrylsäure oder Methacrylsäure, wie z. B. Hydroxyethyl(meth)acrylat, Hydroxypropyl(meth)acrylat oder Hydroxybutyl(meth)acrylat, gegebenenfalls gemeinsam mit Acrylsäurealkylestern und/oder Methacrylsäurealkylestern, wie z. B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Isobornyl(meth)acrylat, Lauryl(meth)acrylat, Styrol oder anderen copolymerisierbaren olefinisch ungesättigten Monomeren, wie z. B. Acrylsäure, Methacrylsäure oder Maleinsäuredimethylester.

Geeignete Polyole sind beispielsweise auch die bekannten, durch Umsetzung einfacher Gly-kole, wie z. B. Diethylenglykol, Triethylenglykol, 4,4'-Dioxethoxy-diphenyldimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole zur Herstellung der im Wesentlichen isocyanatgruppenfreien, Uretdiongruppen enthaltenden Polyadditionsverbindungen A) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole ebenso wie Hydroxylgruppen enthaltende Polybutadiene.

Geeignete Amine zur Herstellung der im Wesentlichen isocyanatgruppenfreien, Uretdiongruppen enthaltenden Polyadditionsverbindungen A) sind beispielsweise einfache aliphatische bzw. cycloaliphatische Monoamine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin.

Geeignete Amine sind auch beliebige aliphatische und cycloaliphatische Amine mit mindestens zwei primär und/oder sekundär gebundenen Aminogruppen, wie z. B. 1,2-Diaminoethan, 1,2-Diaminopropan, 1,3-Diaminopropan, 1,4-Diaminobutan, 1,2-Diamino-2-methylpropan, 1,5-Diaminopentan, 1,3-Diamino-2,2-dimethylpropan, 1,6-Diaminohexan, 1,5-Diamino-2-methylpentan, 1,6-Diamino-2,2,4-trimethylhexan, 1,6-Diamino-2,4,4-trimethylhexan, 1,7-Diaminoheptan, 1,8-Diaminooctan, 2,5-Diamino-2,5-dimethylhexan, 1,9-Diaminononan, 2-Methyl-1,8-diaminooctan, 1,10-Diaminodecan, 1,11-Diaminoundecan, 1,12-Diaminododecan, 1,2-Diaminocyclopentan, 1,2-Diaminocyclohexan, 1-Amino-3,3,5-trimethyl-5-aminomethylcyclohexan (Isophorondiamin, IPDA), 3(4)-Aminomethyl-1-methylcyclohexylamin, 1,3-Diamino-2- und/oder -4-methylcyclohexan, Isopropyl-2,4- und/oder 2,6-diaminocyclohexan, 1,3-Bis(aminomethyl)-cyclohexan, 1,8-p-Diaminomenthan, Bis(4-aminocyclohexyl)-methan, Bis(4-amino-3-methylcyclohexyl)-methan, Bis(4-amino-3,5-dimethylcyclohexyl)-methan, Bis(4-amino-2,3,5-trimethylcyclohexyl)-methan, 1,1-Bis(4-aminocyclohexyl)-propan, 2,2-Bis(4-aminocyclohexyl)-propan, 1,1-Bis(4-aminocyclohexyl)-ethan, 1,1-Bis(4-aminocyclohexyl)-butan, 2,2-Bis(4-aminocyclohexyl)-butan, 1,1-Bis(4-amino-3-methylcyclohexyl)-ethan, 2,2-Bis(4-amino-3-methylcyclohexyl)-propan, 1,1-Bis(4-amino-3,5-dimethylcyclohexyl)-ethan, 2,2-Bis(4-amino-3,5-dimethylcyclohexyl)-propan, 2,2-Bis(4-amino-3,5-dimethylcyclohexyl)-butan, 2,4-Diaminodicyclohexylmethan, 4-Aminocyclohexyl-4-amino-3-methylcyclohexyl-methan, 4-Amino-3,5-dimethylcyclohexyl-4-amino-3-methylcyclohexyl-methan und 2-(4-Aminocyclohexyl)-2-(4-amino-3-methylcyclohexyl)-methan, m-Xylylendiamin, Methyliminobispropylamin, Iminobispropylamin, Bis(6-aminohexyl)-amin, N,N-Bis(3-aminopropyl)-ethylendiamin, 4-Aminomethyl-1,8-octandiamin, Bis(aminopropyl)piperazin, Aminoethylpiperazin, Diethylentriamin, Dipropylentriamin, Triethylentetramin, Tetraethylenpentamin, Pentaethylenhexamin, Heptaethylenoctamin.

Geeignete Amine sind auch aminofunktionelle Polyalkylenglykole, wie z. B. 1,2-Bis(aminoethoxy)-ethan, 1,11-Diamino-3,6,9-trioxaundecan, 1,13-Diamino-4,7,10-trioxatride-can und insbesondere die unter dem Handelsnamen Jeffamine® von Firma Huntsman Corp. kommerziell vertriebenen aminfunktionalisierten Polyalkylenglykole mit zahlenmittleren Molekulargewichten bis zu 5000, bevorzugt bis zu 2000, besonders bevorzugt bis zu 1000.

Gegebenenfalls können auch sterisch gehinderte aliphatische Diamine mit zwei sekundär gebundenen Aminogruppen zur Herstellung der im Wesentlichen isocyanatgruppenfreien, Uretdiongruppen enthaltenden Polyadditionsverbindungen A) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Weitere geeignete Polyamine sind darüber hinaus auch die als Vernetzerkomponenten für Epoxyharze bekannten Polyamidoamine, Polyimine und/oder Polyvinylamine.

Zur Herstellung der im Wesentlichen isocyanatgruppenfreien, Uretdiongruppen enthaltenden Polyadditionsverbindungen A) sind schließlich auch Aminoalkohole, wie z. B. 2-Aminoethanol, die isomeren Aminopropanole und -butanole, 3-Amino-1,2-propandiol und 1,3-Diamino-2-propanol, geeignet.

Bei der Herstellung der im Wesentlichen isocyanatgruppenfreien, Uretdiongruppen enthaltenden Polyadditionsverbindungen A) aus isocyanatfunktionellen Uretdiongruppen enthaltenden Verbindungen der vorstehend genannten Art kommen die genannten Alkohole und/oder Amine entweder einzeln oder als Mischungen aus mindestens zwei solcher Alkohole und/oder Amine zum Einsatz.

Die Herstellung der im Wesentlichen isocyanatgruppenfreien, Uretdiongruppen enthaltenden Polyadditionsverbindung A) kann nach unterschiedlichen Methoden erfolgen, beispielsweise den literaturbekannten Verfahren zur Herstellung von Polyuretdionzusammensetzungen, wie sie z.B. in WO 99/11690 und WO 2011/115669 beispielhaft beschrieben sind.

Dabei können neben den durch Oligomerisierung erhaltenen isocyanatfunktionellen, Uretdiongruppen enthaltenden Verbindungen gegebenenfalls weitere monomere Isocyanate der oben genannten Art, und/oder oligomere Polyisocyanate, vorzugsweise solche mit Isocyanurat-, Biuret-, Iminooxadazindion-, Allophanat- und/oder Urethan-Struktur, in einer Menge von bis zu 30 Gew.-%, bezogen auf das Gesamtgewicht aller Reaktionspartner (umfassend die isocyanatfunktionellen Uretdiongruppen enthaltenden Verbindungen, Alkohole und/oder Amine) mitverwendet werden.

Die Umsetzung erfolgt vorzugsweise unter Einhaltung eines Äquivalentverhältnisses von Isocyanatgruppen zu gegenüber Isocyanaten reaktiven Gruppen von 1 : 0,9 bis 0,5 : 1, vorzugsweise von 1 : 0,95 bis 0,7 : 1, besonders bevorzugt von 1 : 1 bis 0,9 : 1.

In einer weiteren bevorzugten Ausführungsform handelt es sich bei der Komponente A) um Polyadditionsverbindungen, die durch Umsetzung isocyanatfunktioneller, Uretdiongruppen enthaltender Verbindungen mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 1,0 : 0,9 bis 0,5 : 1 erhältlich sind.

Die Umsetzung kann lösemittelfrei oder in einem geeigneten gegenüber Isocyanatgruppen inerten Lösungsmittel durchgeführt werden.

Geeignete Lösemittel zur Herstellung der Polyadditionsverbindungen A2) sind insbesondere solche, die sich gegenüber den Isocyanatgruppen der Verbindung A1) inert verhalten, beispielsweise die bekannten üblichen aprotischen Lacklösemittel wie z. B. Ethylacetat, Isopropylacetat, Butylacetat, Isobutylacetat, Amylacetat, 2-Ethylhexylacetat, Ethylenglykolmonomethyletheracetat, Ethylenglykolmonoethyletheracetat, Ethylenglykolmonobutyletheracetat, 1-Methoxypropyl-2-acetat, 3-Methoxy-n-butylacetat, Aceton, Diethylketon, 2-Butanon, 4-Methyl-2-pentanon, Diisobutylketon Cyclohexanon, Cyclohexan, Toluol, Xylol, Chlor-benzol, Dichlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, Ethylethoxypropionat, Propylencarbonat, N-Methylpyrrolidon und N-Methylcaprolactam, Dioxan, Tetrahydrofuran oder beliebige Gemische solcher Lösemittel.

Die Umsetzung der isocyanatfunktionellen Uretdiongruppen enthaltenden Verbindungen mit den Alkoholen und/oder Aminen zur Uretdiongruppen enthaltenden Polyadditionsverbindungen A) kann unkatalysiert erfolgen. Zur Reaktionsbeschleunigung können aber auch übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undec-7-en, 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N', N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-acetat, Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutyldilaurylzinnmercaptid, oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte Katalysatoren sind tert. Amine, Wismuth- und Zinnverbindungen der genannten Art.

Bei der Uretdiongruppe aufweisenden Komponente A) handelt es sich bevorzugt um im Wesentlichen isocyanatgruppenfreie, durch Umsetzung isocyanatfunktioneller Uretdiongruppen enthaltender Verbindungen mit Alkoholen und/oder Aminen erhältliche Polyadditionsverbindungen der genannten Art.

Ganz besonders bevorzugt sind die im erfindungsgemäßen Verfahren eingesetzten Uretdiongruppen aufweisenden Komponente A) völlig frei von Isocyanatgruppen. Der Begriff "im Wesentlichen isocyanatgruppenfrei" soll im Rahmen der vorliegenden Veröffentlichung allerdings so verstanden werden, dass die Komponente A) im Anschluß an ihre Herstellung durchaus noch geringe Restmengen an Isocyanatgruppen aufweisen darf. Als "im Wesentlichen isocyanatgruppenfrei" sollen vorzugsweise Uretdiongruppen enthaltenden Polyadditionsverbindungen A) gelten, die in lösemittelfreier Form einen Gehalt an freien Isocyanatgruppen von weniger als 2 Gew.-%, vorzugsweise von weniger als 1 Gew.-% und besonders bevorzugt von weniger als 0,5 Gew.-% aufweisen.

Es ist ergänzend oder alternativ bevorzugt, dass die Umsetzung von A) mindestens einer im Wesentlichen isocyanatgruppenfreien Komponente, die mindestens eine Uretdiongruppe aufweist, in Gegenwart B) mindestens eines Katalysators, enthaltend ein Strukturelement der allgemeinen Formeln (I) und/oder (II) in Abwesenheit von hydroxy- oder mercaptofunktionellen Verbindungen durchgeführt wird.

Beim erfindungsgemäßen Verfahrenen wird die isocyanatgruppenfreie, Uretdiongruppen aufweisende Komponente A) mit mindestens einem salzartigen Katalysator B) mit einem Imidazolium-Kation und/oder Imidazolinium-Kation zur Reaktion gebracht.

Als Katalysatoren B) geeignete Verbindungen sind auch als ionische Flüssigkeiten vom Imidazolium- und Imidazoliniumtyp bekannt und werden beispielsweise als Lösemittel in der chemischen Synthese eingesetzt. Verfahren zu ihrer Herstellung sind beispielsweise in Chem. Rev. 99, 8, 2071-2084 und WO 2005/070896, beschrieben.

Bei den Katalysatoren B) handelt es sich um salzartige Verbindungen, enthaltend ein Strukturelement der allgemeinen Formeln (I) oder (II) 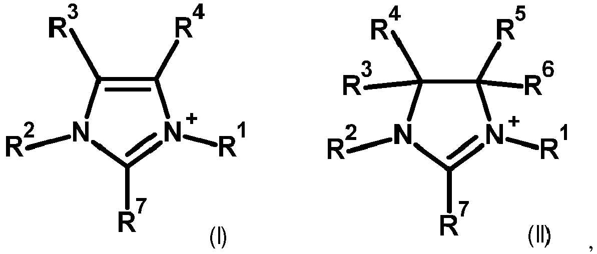 in welchen
- R¹, R², R³, R⁴, R⁵ und R⁶: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können,
- R³, R⁴, R⁵ und R⁶: unabhängig voneinander auch für Wasserstoff stehen können, und
- R⁷: für Wasserstoff oder ein Carboxylat-Anion (COO⁻) steht.

Bevorzugte Katalysatoren B) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
- R³, R⁴, R⁵ und R⁶: für Wasserstoff stehen, und wobei
- R⁷: für Wasserstoff oder ein Carboxylat-Anion (COO⁻) steht.

Besonders bevorzugte Katalysatoren B) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische organische Reste mit 1 bis 12 Kohlenstoffatomen bedeuten,
- R³, R⁴, R⁵ und R⁶: für Wasserstoff stehen, und
- R⁷: für Wasserstoff oder ein Carboxylat-Anion (COO⁻) steht.

Als geeignete Katalysatoren der allgemeinen Formel (I) seien beispielhaft solche genannt, die ein 1,3-Dimethylimidazolium-, 1-Methyl-3-ethylimidazolium-, 1-Methyl-3-propylimidazolium-, 1-Methyl-3-butylimidazolium-, 1-Methyl-3-pentylimidazolium-, 1-Methyl-3-hexylimidazolium-, 1-Methyl-3-octylimidazolium-, 1-Methyl-3-nonylimidazolium-, 1-Methyl-3-decylimidazolium-, 1-Decyl-3-methylimidazolium-, 1-Methyl-3-benzylimidazolium-, 1-Methyl-3-(3-phenylpropyl)imidazolium-, 1-Ethyl-3-methylimidazolium (EMIM)-, 1-lsopropyl-3-methylimidazolium-, 1-Butyl-3-methylimidazolium (BMIM)-, 1-Hexyl-3-methylimidazolium-, 1-Heptyl-3-methylimidazolium-, 1-(2-Ethyl)hexyl-3-methylimidazolium (OMIM)-, 1,3-Bis(tert-butyl)-imidazolium-, 1,3-Bis(2,4,6-trimethylphenyl)imidazolium- oder 1,3-Dimethylbenzimidazolium-Kation enthalten.

Als geeignete Katalysatoren der allgemeinen Formel (II) seien beispielhaft solche genannt, die ein 1,3-Dimethylimidazolinium-, 1-Ethyl-3-methylimidazolinium-, 1-Butyl-3-methylimidazolium- 1,3-Bis-(2,6-diisopropylphenyl)imidazolinium- oder 1,3-Bis(2,4,6-trimethylphenyl)imidazolinium-1-(1-Adamantyl)-3-(2,4,6-trimethylphenyl)imidazolinium-, 1,3-Diphenyl-4,4,5,5-tetramethylimidazolinium-, 1,3-Di-o-tolyl-4,4,5,5-tetramethylimidazolinium Kation enthalten.

Als Gegenion zu den Imidazolium- und Imidazolinium-Kationen enthalten die beim erfindungsgemäßen Verfahren eingesetzten Katalysatoren B) beliebige anorganische und/oder organische Anionen, wie z. B. Halogenid-, Sulfat-, Hydroxysulfat-, Sulfit-, Nitrat-, Carbonat-, Hydrogencarbonat-, Arylsulfonat-, Alkylsulfonat-, Trifluormethylsulfonat-, Alkylsulfat-, Phosphat-, Dialkylphosphat-, Hexafluorophosphat-, Trifluormethylborat-, Tetrafluoroborat-, Bis(trifluoromethylsulfonyl)imid-, Dicyanamid- und/oder Carboxylat-Anionen.

Das Gegenion zu den Imidazolium- und Imidazolinium-Kationen kann daneben auch eine Carboxylatgruppe (COO⁻) darstellen, die als R⁷ der allgemeinen Formel (I) direkt am Imidazolium-Kation gebunden vorliegt, wobei der Katalysator B) in diesem Fall in Form einer zwitterionischen Struktur aufweist.

Geeignete Katalysatoren B) für das erfindungsgemäße Verfahren sind beispielsweise 1,3-Dimethylimidazoliumchlorid, 1,3-Dimethylimidazolium-2-carboxylat, 1,3-Dimethylimidazoliumdimethylphosphat, 1-Ethyl-3-methylimidazoliumchlorid, 1-Ethyl-3-methylimidazoliumbromid, 1-Ethyl-3-methylimidazoliumiodid, 1-Ethyl-3-methylimidazoliumnitrat, 1-Ethyl-3-methylimidazoliumhydrogencarbonat, 1-Ethyl-3-methylimidazoliummethansulfonat, 1-Ethyl-3-methylimidazoliumtrifluoromethansulfonat, 1-Ethyl-3-methylimidazoliumtrifluoro(trifluoromethyl)borat, 1-Ethyl-3-methylimidazoliumhydrogensulfat, 1-Ethyl-3-methylimidazoliumethylsulfat, 1-Ethyl-3-methylimidazoliumdicyanamid, 1-Ethyl-3-methylimidazoliumtetrafluoroborat, 1-Ethyl-3-methylimidazoliumdiethylphosphat, 1-Ethyl-3-methylimidazoliumhexafluorophosphat, 1-Ethyl-3-methylimidazolium-bis(trifluoromethansulfonyl)imid, 1-Ethyl-3-methylimidazolium-2-carboxylat, 1-Ethyl-3-methylimidazoliumacetat, 1-Ethyl-3-methylimidazolium-(L)-(+)-lactat, 1-Methyl-3-propylimidazoliumiodid, 1,3-Diisopropyl-4,5-dimethylimidazolium-2-carboxylat, 1-Butyl-3-methylimidazoliumchlorid, 1-Butyl-3-methylimidazoliumbromid, 1-Butyl-3-methylimidazoliumiodid, 1-Butyl-3-methylimidazoliumtrifluoromethansulfonat, 1-Butyl-3-methylimidazoliumethylsulfat, 1-Butyl-3-methylimidazolium-n-octylsulfat, 1-Butyl-3-methylimidazoliumdicyanamid, 1-Butyl-3-methylimidazoliumtrifluoro(trifluoromethyl)borat, 1-Butyl-3-methylimidazoliumtetrafluoroborat, 1-Butyl-3-methylimidazoliumdibutylphosphat, 1-Butyl-3-methylimidazoliumhexafluorophosphat, 1-Butyl-3-methylimidazolium-2-carboxylat, 1-Butyl-3-methylimidazoliumacetat, 1-Butyl-3-methylimidazolium-bis(trifluoromethansulfonyl)imid, Bis(tert-butyl)-imidazolium-2-carboxylat, 1-Hexyl-3-methylimidazoliumchlorid, 1-Hexyl-3-methylimidazoliumbromid, 1-Hexyl-3-methylimidazoliumtetrafluoroborat, 1-Hexyl-3-methylimidazoliumbis(trifluoromethansulfonyl)imid, 1-Hexyl-3-methylimidazoliumhexafluorophosphat, 1-Methyl-3-n-octylimidazoliumbromid, 1-Methyl-3-n-octylimidazoliumchlorid, 1-Methyl-3-n-octylimidazoliumhexafluorophosphat, 1-Decyl-3-methylimidazolium-bis(trifluoromethansulfonyl)imid, 1,3-Dimethylimidazoliniumchlorid, 1,3-Dimethylimidazolinium-2-carboxylat, 1,3-Dimethylimidazoliniumacetat, 1-Ethyl-3-methylimidazoliniumchlorid, 1-Ethyl-3-methylimidazolinium-2-carboxylat, 1-Ethyl-3-methylimidazoliniumacetat, 1-Butyl-3-methylimidazolinium-2-carboxylat, 1,3-Bis-(2,6-diisopropylphenyl)imidazoliniumchlorid oder 1,3-Bis(2,4,6-trimethylphenyl)imidazolinium-1-(1-Adamantyl)-3-(2,4,6-trimethylphenyl)imidazoliniumchlorid und/oder 1,3-Diphenyl-4,4,5,5-tetramethylimidazoliniumchlorid.

Besonders bevorzugte Katalysatoren B) sind Imidazoliumsalze der genannten Art mit Carboxylat-Anionen, ganz besonders bevorzugt 1,3-Dimethylimidazolium-2-carboxylat, 1-Ethyl-3-methylimidazolium-2-carboxylat, 1-Ethyl-3-methylimidazoliumacetat, 1-Butyl-3-methylimidazolium-2-carboxylat und/oder 1-Butyl-3-methylimidazoliumacetat.

Die Katalysatoren B) kommen beim erfindungsgemäßen Verfahren in einer weiteren bevorzugten Ausführungsform entweder einzeln oder als Mischungen aus mindestens zwei solcher Katalysatoren in einer Menge von 0,001 bis 15 Gew.-%, vorzugsweise 0,005 bis 12 Gew.-%, besonders bevorzugt 0,01 bis 10 Gew.-%, bezogen auf das Gesamtgewicht der Komponenten A) und B), exklusive gegebenenfalls in diesen Komponenten vorliegender Lösemittel, Hilfs- oder Zusatzstoffe, zum Einsatz.

Das erfindungsgemäße Verfahren eignet sich hervorragend zur Herstellung von über Isocyanuratstrukturen vernetzten Polyurethan-Kunststoffen aus im Wesentlichen isocyanatgruppenfreien, Uretdiongruppen aufweisenden Ausgangskomponente und wird hierfür verwendet.

Daher sind Zusammensetzungen, vorzugsweise Beschichtungsmittel, enthaltend wenigstens eine isocyanatgruppenfreie, durch Umsetzung isocyanatfunktioneller Uretdiongruppen enthaltender Verbindungen mit Alkoholen und/oder Aminen erhältliche Polyadditionsverbindungen A) der genannten Art, mindestens einen Katalysator B) mit Imidazolium- oder Imidazolinium-Struktur sowie gegebenenfalls weitere Hilfs- und Zusatzstoffe, ebenfalls Gegenstand der Erfindung.

Bevorzugt findet das erfindungsgemäße Verfahren zur Herstellung von Beschichtungsmitteln Anwendung.

In einer weiteren bevorzugten Ausführungsform erfolgt die Durchführung des erfindungsgemäßen Verfahrens und Aushärtung der erfindungsgemäßen Zusammensetzungen im Temperaturbereich von 0 bis 230°C, vorzugsweise von 40 bis 200°C, besonders bevorzugt von 70 bis 180°C und gan z besonders bevorzugt von 80 bis 160°C, vorzugsweise über einen Zeitraum von 1 Minut e bis zu 12 Stunden.

Unter diesen Bedingungen reagieren die in Komponente A) ursprünglich enthaltenen Uretdiongruppen in der Regel vollständig zu Isocyanuratgruppen ab. Wie IRspektroskopische Untersuchungen zeigen, werden dabei über die gesamte Reaktionszeit keine freien Isocyanatgruppen gebildet. Es handelt sich um eine direkte Reaktion von Uretdion- zu Isocyanuratgruppen.

Ein weiterer Gegenstand der Erfindung ist die Verwendung mindestens einer erfindungsgemäßen Zusammensetzung zur Herstellung von Polyurethan-Kunststoffen. Außerdem ist ein weiterer Gegenstand der Erfindung die Verwendung mindestens einer erfindungsgemäßen Zusammensetzung zur Herstellung von Beschichtungsmitteln.

Als Untergründe für die mit Hilfe der erfindungsgemäßen Zusammensetzungen formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände der Erfindung sind Beschichtungsmittel enthaltend mindestens eine erfindungsgemäße Zusammensetzung und ein Substrat, beschichtet mit einem gegebenenfalls unter Wärmeeinwirkung ausgehärteten erfindungsgemäßen Beschichtungsmittel.

Die mit den erfindungsgemäßen Zusammensetzungen formulierten Beschichtungsmittel, denen gegebenenfalls die üblichen, dem Fachmann aus der Lacktechnologie bekannten Hilfs- und Zusatzmittel, wie z. B. Lösungsmittel, UV-Stabilisatoren, Antioxidantien, Verlaufsmittel, Rheologieadditive, Slipadditive, Farbstoffe, Mattierungsmittel, Flammschutzmittel, Hydrolyseschutzmittel, Mikrobizide, Algizide, Wasserfänger, Thixotropieträger, Netzmittel, Entlüftungsmittel, Haftvermittler, Füllstoffe und/oder Pigmente, einverleibt werden können, ergeben unter den genannten Aushärtebedingungen Filme mit guten lacktechnischen Eigenschaften.

Ebenfalls Gegenstand der Erfindung sind über Isocyanuratgruppen vernetzte Polyurethan-Kunststoffe, vorzugsweise Formkörper, erhältlich oder erhalten aus einer gegebenenfalls unter Wärmeeinwirkung ausgehärteten erfindungsgemäßen Zusammensetzung, oder Beschichtungen, die durch Verwendung der oben beschriebenen Beschichtungsmittel zugänglich sind.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Rest-Monomeren Gehalte wurden nach DIN EN ISO 10283:2007-11 gaschromatographisch mit internem Standard gemessen.

Die Zusammensetzungen der Uretdion-Modellverbindungen wurden durch Gelpermationschromatographie in Anlehnung an DIN 55672-1:2016-03 (Gelpermeationschromatographie (GPC) - Teil 1: Tetrahydrofuran (THF) als Elutionsmittel) ermittelt, mit der Änderung, dass mit einer Flußrate von 0,6 ml/min statt 1,0 ml/min gearbeitet wurde. Die den Chromatogrammen entnommenen Anteile der unterschiedlichen Oligomere in Flächen-%, welche softwaregestützt ermittelt wurden, wurden näherungsweise jeweils Anteilen in Gew.-% gleichgesetzt. Die Bestimmung der Pendeldämpfung nach König erfolgte nach DIN EN ISO 1522:2007-04 auf Glasplatten.

Zur Bestimmung der bei der Aushärtung der erfindungsgemäßen Zusammensetzungen entstehenden Uretdionfolgeprodukte erfolgte anhand protokonenentkoppelter ¹³C-NMR-Spektren (aufgenommen unter Verwendung von CDCl₃ als Lösungsmittel an einem Gerät Bruker DPX-400). Die für die vorliegende Erfindung relevanten Strukturelemente weisen folgende chemische Verschiebungen (in ppm) auf: Uretdion: 157.1; Urethan: 156,3; Isocyanurat: 148.4.

IR-Spektren wurden FT-IR-Spektrometer Alpha-P IR der Fa. Bruker aufgenommen. Für In-situ IR-Messungen wurde eine Matrix-FM der Fa. Bruker mit einer 3mm Diamantkopfsonde verwendet. Die Spektren wurden mittels der Spektroskopie-Software OPUS 7.0 von Bruker analysiert.

Die Bestimmung der Lösemittelbeständigkeit erfolgte mit Xylol als typischem Lacklösemittel. Dazu wurde eine kleine Menge des Lösemittels in ein Reagenzglas gegeben und mit einem Wattebausch an der Öffnung versehen, so dass eine mit Xylol gesättigte Atmosphäre innerhalb des Reagenzglases entstand. Das Reagenzglas wurde anschließend mit dem Wattebausch auf die Lackoberfläche gebracht und verblieben dort für 5 Min. Nach Abwischen des Lösemittels wurde der Film auf Zerstörung/Erweichung/Haftverlust geprüft. (0 = keine Veränderung, 5 = Film zerstört)

### Ausgangsverbindungen

### Herstellung einer HDI-Uretdion-Modellverbindung (HDI-UD1)

### Herstellung von 1,3-bis(6-isocyanatohexyl)-1,3-diazetidin-2,4-dion

Nach dem in Beispiel 1 der EP-A 0 789 017 beschriebenen Verfahren wurde durch Tributylphosphin-katalysierte Oligomerisierung von 1,6-Diisocyanatohexan (HDI) und anschließende destillative Aufarbeitung 1,3-bis(6-isocyanatohexyl)-1,3-diazetidin-2,4-dion (ideales Bis(6-isocyanatohexyl)-uretdion) hergestellt.

| | |
|---|---|
| NCO-Gehalt: | 25,0% |
| monomeres HDI: | < 0,03 % |
| Viskosität (23°C): | 28 mPas |

Nach gelpermeationschromatographischer Untersuchung (GPC) liegt folgende Zusammensetzung vor:

| | | |
|---|---|---|
| HDI-Uretdion (n = 2): | 99,2% | (nach GPC) |
| HDI-Isocyanurat (n = 3): | 0,4% | (nach GPC) |
| höhere Oligomere: | 0,4 % | (nach GPC) |

### Herstellung des Dimethylurethans des Bis(6-isocyanatohexyl)-uretdions

10 g (0,0595 val) des vorstehend beschriebenen HDI-Uretdions wurden in 30 ml Dichlormethan gelöst, mit 2 g (0,0625 mol) Methanol versetzt und bei 40°C unter trockenem Stickstoff gerührt, bis nach 8 h IR-spektroskopisch kein Isocyanat mehr nachweisbar war. Anschließend wurden Dichlomethan und überschüssiges Methanol mit Hilfe eines Rotationsverdampfers entfernt. Es lag das Dimethylurethan des Bis(6-isocyanatohexyl)-uretdions (HDI-UD1) als farbloser Feststoff vor. IR-spektroskopisch waren keine freien Isocyanatgruppen mehr vorhanden (Fehlen der Isocyanat-Absorptionsbande bei 2270 cm⁻¹)

| | |
|---|---|
| Uretdiongruppengehalt: | 21,0 % (berechnet als C₂N₂O₂, Molekulargewicht 84) |

### Herstellung eines HDI-Polvuretdions (HDI-UD2)

1000 g (5,95 val) des vorstehend beschriebenen idealen Bis(6-isocyanatohexyl)-uretdions (NCO-Gehalt: 25,0 %) wurden in 800 g Butylacetat gelöst, mit 4,6 g (0,2 Gew.-%) einer 10 %igen Lösung von Dibutylzinndilaurat (DBTL) in Butylacetat versetzt und unter trockenem Stickstoff und Rühren auf 60°C erwärmt. Zu dieser Lösung wurde innerhalb von 2 Stunden eine Mischung aus 347,5 g (4,76 val) 2,2,4-Trimethylpentan-1,3-diol und 154,7 g (1,19 val) 2-Ethyl-1-hexanol zugetropft. Nach einer Rührzeit von 48 Stunden bei 60°C betrug der NCO-Gehalt < 0,1 %. Es wurde eine praktisch farblose Lösung eines HDI-Polyuretdionvernetzers (HDI-UD2) erhalten.

| | | |
|---|---|---|
| NCO-Gehalt: | < 0,1 % | |
| Uretdiongruppengehalt: | 10,8 % | (berechnet als C₂N₂O₂, Molekulargewicht 84) |
| Uretdion-Funktionalität: | 5 | (berechnet) |
| Festkörpergehalt:: | ca. 65 % | |
| Viskosität (23°C): | 1400 mPas | |

### Herstellung einer PDI-Uretdion-Modellverbindung (PDI-UD1)

### Herstellung von 1,3-Bis(5-isocyanatopentyl)-1,3-diazetidin-2,4-dion

Nach dem in Beispiel 1 der EP-A 0 789 017 beschriebenen Verfahren wurde durch Tributylphosphin-katalysierte Oligomerisierung von 1,5-Diisocyanatopentan (PDI) anstelle von 1,6-Diisocyanatohexan (HDI) und anschließende destillative Aufarbeitung 1,3-Bis(5-isocyanatopentyl)-1,3-diazetidin-2,4-dion (ideales Bis(5-isocyanatopentyl)-uretdion) hergestellt.

| | |
|---|---|
| NCO-Gehalt: | 27,3% |
| monomeres PDI: | 0,03% |
| Viskosität (23°C): | 22 mPas |

Nach gelpermeationschromatographischer Untersuchung (GPC) liegt folgende Zusammensetzung vor:

| | | |
|---|---|---|
| HDI-Uretdion (n = 2): | 98,7% | (nach GPC) |
| HDI-Isocyanurat (n = 3): | 0,7% | (nach GPC) |
| höhere Oligomere: | 0,6% | (nach GPC) |

### Herstellung des Dimethylurethans des Bis(5-isocyanatopentyl)-uretdions (PDI-UD1)

10 g (0,065 val) des vorstehend beschriebenen PDI-Uretdions wurden in 30 ml Dichlormethan gelöst, mit 2 g (0,068 mol) Methanol versetzt und bei 40°C unter trockenem Stickstoff gerührt, bis nach 8 h IR-spektroskopisch kein Isocyanat mehr nachweisbar war. Anschließend wurden Dichlomethan und überschüssiges Methanol mit Hilfe eines Rotationsverdampfers entfernt. Es lag das Dimethylurethan des Bis(5-isocyanatopentyl)-uretdions (PDI-UD1) als farbloser Feststoff vor. IR-spektroskopisch waren keine freien Isocyanatgruppen mehr vorhanden (Fehlen der Isocyanat-Absorptionsbande bei 2270 cm⁻¹)

| | |
|---|---|
| Uretdiongruppengehalt: | 22,3 % (berechnet als C₂N₂O₂, Molekulargewicht 84) |

### Katalysatoren

1-Ethyl-3-methylimidazoliumacetat (97 %), Sigma-Aldrich Chemie GmbH, München, DE
1-Ethyl-3-methylimidazolium-(L)-(+)-lactat (≥95 %), Sigma-Aldrich Chemie GmbH, München, DE
1-Ethyl-3-methylimidazolium-2-carboxylat, hergestellt nach dem in Chem. Eur. J. 2016, 22, 16292 - 16303 beschriebenen Verfahren
1-Ethyl-3-methylimidazoliumhydrogencarbonat (96 %), Alfa Chemistry, New York, USA

### Beispiel 1:

In einem ofengetrockneten und druckresistenten Reaktionsvial wurden 70 mg (0,40 mmol) 1-Ethyl-3-methylimidazoliumacetat zusammen mit 800,0 mg (2,00 mmol) der HDI-Uretdion-Modellverbindung (HDI-UD1) in 10,0 ml absolutiertem Tetrahydrofuran (THF) gelöst. Das Reaktionsgefäß wurde verschlossen und anschließend eine Stunde bei 80°C gerührt. Nach Entfernen des Lösungsmittels im Hochvakuum wurde der Rückstand zwischen 30 ml Wasser und 50 ml Ethylacetat ausgeschüttelt. Die wässrige Phase wurde abgetrennt und weitere dreimal mit jeweils 50 ml Ethylacetat extrahiert. Die vereinigten organischen Phasen wurden mit 100 ml gesättigter NaCI-Lösung gewaschen, über MgSO₄ getrocknet, filtriert und das Lösungsmittel im Vakuum entfernt. Man erhielt als Produkt in quantitativer Ausbeute (800 mg) einen weißen Feststoff, bei dem es sich nach ¹³C-NMR um das Trimethylurethan des Tris(6-isocyanatohexyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 2:

In einem ofengetrockneten und druckresistenten Reaktionsvial wurden 8,4 mg (0,04 mmol) 1-Ethyl-3-methylimidazolium-(L)-(+)-lactat zusammen mit 80,0 mg (0,20 mmol) der HDI-Uretdion-Modellverbindung (HDI-UD1) in 1,0 ml absolutiertem Tetrahydrofuran (THF) gelöst. Das Reaktionsgefäß wurde verschlossen und anschließend eine Stunde bei 80°C gerührt. Nach Entfernen des Lösungsmittels im Hochvakuum erhielt man als Produkt ein blassgelbes Öl, bei dem es sich nach ¹³C-NMR um das Trimethylurethan des Tris(6-isocyanatohexyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 3:

In einem ofengetrockneten und druckresistenten Reaktionsvial wurden 6,16 mg (0,04 mmol) 1-Ethyl-3-methylimidazolium-2-carboxylat zusammen mit 80,0 mg (0,20 mmol) der HDI-Uretdion-Modellverbindung (HDI-UD1) in 1,0 ml absolutiertem Tetrahydrofuran (THF) gelöst. Das Reaktionsgefäß wurde verschlossen und anschließend eine Stunde bei 80°C gerührt. Nach Entfernen des Lösungsmittels im Hochvakuum erhielt man als Produkt ein blassgelbes Öl, bei dem es sich nach ¹³C-NMR um das Trimethylurethan des Tris(6-isocyanatohexyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 4:

In einem ofengetrockneten und druckresistenten Reaktionsvial wurden 71.7 mg (0,40 mmol) 1-Ethyl-3-methylimidazoliumhydrogencarbonat zusammen mit 800 mg (2,00 mmol) der HDI-Uretdion-Modellverbindung (HDI-UD1) in 10 ml absolutiertem Tetrahydrofuran (THF) gelöst. Das Reaktionsgefäß wurde verschlossen und anschließend eine Stunde bei 80°C gerührt. Anschließend wurde da s Lösungsmittel im Hochvakuum entfernt und das erhaltene Rohprodukt nach dem in Beispiel 1 beschriebenen Verfahren aufgearbeitet. Man erhielt als Produkt in quantitativer Ausbeute (800 mg) einen weißen Feststoff, bei dem es sich nach ¹³C-NMR um das Trimethylurethan des Tris(6-isocyanatohexyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 5:

In einem ofengetrockneten und druckresistenten Reaktionsvial wurden 6,16 mg (0,04 mmol) 1-Ethyl-3-methylimidazolium-2-carboxylat zusammen mit 80,0 mg (0,20 mmol) der HDI-Uretdion-Modellverbindung (HDI-UD1) in 1,0 ml absolutiertem Tetrahydrofuran (THF) gelöst. Das Reaktionsgefäß wurde verschlossen und anschließend eine Stunde bei 80°C gerührt. Nach Entfernen des Lösungsmittels im Hochvakuum erhielt man als Produkt ein blassgelbes Öl, bei dem es sich nach ¹³C-NMR um das Trimethylurethan des Tris(6-isocyanatohexyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 6:

In einem ofengetrockneten und druckresistenten Reaktionsvial wurden 0,05 g (0,3 mmol) 1-Ethyl-3-methylimidazoliumacetat zusammen mit 0,53 g (1,4 mmol) der PDI-Uretdion-Modellverbindung (PDI-UD1) in 10,6 ml absolutiertem Tetrahydrofuran (THF) gelöst. Das Reaktionsgefäß wurde verschlossen und anschließend eine Stunde bei 80°C gerührt. Nach Entfernen des Lösungsmittels im Hochvakuum erhielt man als Produkt ein hellgelbes Öl, bei dem es sich nach ¹³C-NMR um das Trimethylurethan des Tris(5-isocyanatopentyl)-isocyanurats handelte. Uretdionsignale waren nicht mehr nachweisbar. *In-situ*-IR-Messungen zeigten zu keinem Zeitpunkt der Reaktion die Anwesenheit freier Isocyanatgruppen.

### Beispiel 7 (erfindungsgemäß und Vergleich):

100 g (0,128 val) der 65 %igen Lösung des HDI-Polyuretdionvernetzers (HDI-UD2) in Butylacetat wurden mit 3 g (0,018 mol) 1-Ethyl-3-methylimidazoliumacetat als Katalysator zu einem Beschichtungsmittel gemischt mittels einer Lackhantel in einer Auftrags-Schichtdicke von 150 µm auf eine entfettete Glasplatte appliziert.

Der Lack wurde nach 15-minütigem Ablüften bei Raumtemperatur innerhalb von 40 min bei 100°C ausgehärtet. Es wurde eine harte, elastische und völlig transparente Beschichtungen erhalten, die eine Pendelhärte von 135 s und eine Xylolbeständigkeit von 1 - 2 aufwies.

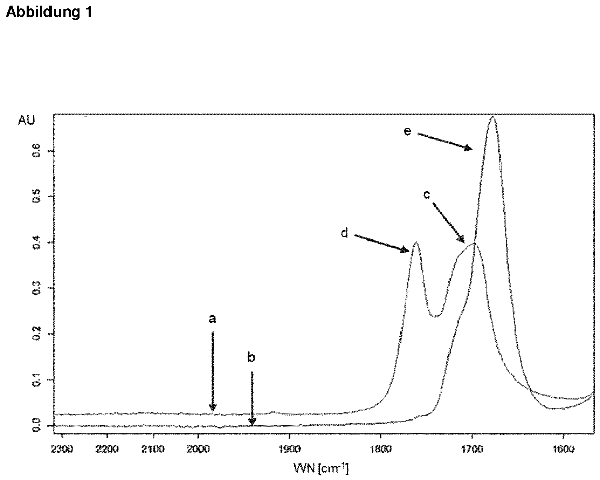

Abbildung 1 zeigt das IR-Spektrum (AU: Absorptionseinheiten, WN: Wellenzahl) des Beschichtungsmittels vor (a) und nach (b) der Aushärtung. Man erkennt, dass die neben Urethangruppen (c) ursprünglich vorhandenen Uretdiongruppen (d) (Bande bei ca. 1780 cm⁻¹) im ausgehärtete Lackfilm vollständig verschwunden sind. Stattdessen tritt eine Isocyanuratbande (e) bei ca. 1670 cm⁻¹ auf. Isocyanatgruppen (Bande bei ca. 2270 cm⁻¹) sind nicht nachweisbar.

## Patentansprüche

1. Verfahren zur Herstellung Isocyanuratgruppen enthaltender Verbindungen, umfassend Umsetzung von
A) mindestens einer im Wesentlichen isocyanatgruppenfreien Komponente, die mindestens eine Uretdiongruppe aufweist, in Gegenwart
B) mindestens eines Katalysators, enthaltend ein Strukturelement der allgemeinen Formeln (I) und/oder (II) 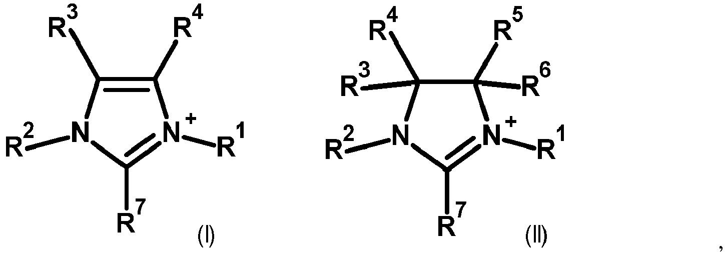 in welchen
R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
R³, R⁴, R⁵ und R⁶ unabhängig voneinander auch für Wasserstoff stehen können, und
R⁷ für Wasserstoff oder ein Carboxylat-Anion (COO⁻) steht.

2. Verfahren gemäß Anspruch 1, **dadurch gekennzeichnet, dass** es sich bei der Komponente A) um durch Oligomerisierung monomerer Isocyanate und/oder durch Umsetzung isocyanatfunktioneller Uretdiongruppen enthaltender Verbindungen mit Alkoholen und/oder Aminen erhältliche Polyadditionsverbindungen handelt.

3. Verfahren gemäß Anspruch 2, **dadurch gekennzeichnet, dass** es sich bei der Komponente A) um Uretdiongruppen enthaltende Verbindungen auf Basis von PDI, HDI, IPDI, NBDI, XDI und/oder H₁₂-MDI handelt.

4. Verfahren gemäß Anspruch 2, **dadurch gekennzeichnet, dass** es sich bei der Komponente A) um Polyadditionsverbindungen handelt, die durch Umsetzung isocyanatfunktioneller, Uretdiongruppen enthaltender Verbindungen mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 1,0 : 0,9 bis 0,5 : 1 erhältlich sind.

5. Verfahren gemäß einem der Ansprüche 1 bis 4, **dadurch gekennzeichnet, dass** es sich bei der Komponente B) um Verbindungen der allgemeinen Formeln (I) und/oder (II) handelt, in welchen
R¹ und R² unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
R³, R⁴, R⁵ und R⁶ für Wasserstoff stehen, und wobei
R⁷ für Wasserstoff oder ein Carboxylat-Anion (COO⁻) steht.

6. Verfahren gemäß einem der Ansprüche 1 bis 5, **dadurch gekennzeichnet, dass** es sich bei der Komponente B) um Verbindungen der allgemeinen Formeln (I) und/oder (II) handelt, in welchen
R¹ und R² unabhängig voneinander für gleiche oder verschiedene Reste stehen, die gesättigte oder ungesättigte, lineare oder verzweigte, aliphatische organische Reste mit 1 bis 12 Kohlenstoffatomen bedeuten,
R³, R⁴, R⁵ und R⁶ für Wasserstoff stehen, und
R⁷ für Wasserstoff oder ein Carboxylat-Anion (COO⁻) steht.

7. Verfahren gemäß einem der Ansprüche 1 bis 6, **dadurch gekennzeichnet, dass** es sich beim Katalysator B) um Imidazoliumsalze der allgemeinen Formel (I) handelt, bei denen R⁷ für ein Carboxylat-Anion steht.

8. Verfahren gemäß einem der Ansprüche 1 bis 6, **dadurch gekennzeichnet, dass** es sich beim Katalysator B) um 1,3-Dimethylimidazolium-2-carboxylat, 1-Ethyl-3-methylimidazolium-2-carboxylat, 1-Ethyl-3-methylimidazoliumacetat, 1-Butyl-3-methylimidazolium-2-carboxylat und/oder 1-Butyl-3-methylimidazoliumacetat handelt.

9. Verfahren gemäß einem der Ansprüche 1 bis 8, **dadurch gekennzeichnet, dass** die Komponente B) in einer Menge von 0,001 bis 15 Gew.-%, bezogen auf das Gesamtgewicht der Komponenten A) und B), exklusive gegebenenfalls in diesen Komponenten vorliegender Lösemittel, Hilfs- oder Zusatzstoffe, vorliegt.

10. Zusammensetzung enthaltend wenigstens eine im Wesentlichen isocyanatgruppenfreie, durch Umsetzung isocyanatfunktioneller Uretdiongruppen enthaltender Verbindungen mit Alkoholen und/oder Aminen erhältliche Polyadditionsverbindung A) und mindestens einen Katalysator B) mit Imidazolium- oder Imidazolinium-Struktur sowie gegebenenfalls weitere Hilfs- und Zusatzstoffe.

11. Verwendung von Zusammensetzungen gemäß Anspruch 10 zur Herstellung von Polyurethan-Kunststoffen oder Beschichtungsmitteln.

12. Polyurethan-Kunststoff, erhältlich oder erhalten aus einer gegebenenfalls unter Wärmeeinwirkung ausgehärteten Zusammensetzung nach Anspruch 10.

13. Formkörper aus einem Polyurethan-Kunststoff gemäß Anspruch 12.

14. Beschichtungsmittel enthaltend Zusammensetzungen gemäß Anspruch 10.

15. Substrat, beschichtet mit einem unter Wärmeeinwirkung ausgehärteten Beschichtungsmittel gemäß Anspruch 14.
